# EUROPÄISCHE PATENTSCHRIFT

(11) **EP 1 957 301 B1**
(45) Veröffentlichungstag und Bekanntmachung des Hinweises auf die Patenterteilung: **27.04.2011**
(21) Anmeldenummer: 06829157.4
(22) Anmeldetag: 28.11.2006
(51) Int. Cl.: B60J 1/20

(54) **FLÄCHENBÜNDIG UM DIE BRÜSTUNG EINER SEITENVERKLEIDUNG EINES KRAFTFAHRZEUGES INTEGRIERTES SONNENSCHUTZROLLO**
ROLLER BLIND FLUSH MOUNTED IN THE TOP OF A SIDE TRIM PANEL OF A MOTOR VEHICLE
STORE ROULANT INTEGRE EN AFFLEUREMENT DANS L'APPUI DE FENETRE D'UN VEHICULE AUTOMOBILE

(30) Priorität: 29.11.2005 DE 102005057248
(43) Veröffentlichungstag der Anmeldung: 20.08.2008
(73) Patentinhaber: Johnson Controls Interiors GmbH & Co. KG, 47929 Grefrath (DE)
(72) Erfinder: BRENDEL, Bernd, 47906 Kempen (DE); BECK, Gernot, 69151 Neckargemünd (DE); BUDKE, Josef, 47829 Krefeld (DE)
(74) Vertreter: Schwöbel, Thilo K.
(86) Internationale Anmeldenummer: PCT/EP2006/011408
(87) Internationale Veröffentlichungsnummer: WO 2007/062804

(56) Entgegenhaltungen:
- DE-A1- 10 010 026
- DE-A1- 10 064 513
- DE-A1- 10 123 801
- DE-A1- 19 605 997
- DE-C1- 3 617 427

## Beschreibung

Die vorliegende Erfindung betrifft die Seitenverkleidung eines Kraftfahrzeuges, die ein Brüstung aufweist, wobei in die Brüstung flächenbündig ein Rollo integriert ist.

Rollos, wie sie beispielsweise aus der DE 10 064 513 A bekannt sind mit denen insbesondere die hinteren Seitenscheiben eines Kraftfahrzeuges zum Sonnenschutz abdeckbar sind, werden heutzutage oftmals in Kraftfahrzeuge eingebaut. Diese Rollos sitzen dabei in der Regel zumindest teilweise auf der Brüstung der Verkleidung beispielsweise einer Seitentür auf und stellen somit bei einem Unfall ein Sicherheitsrisiko dar. Darüber hinaus sind die Bereiche, in denen das Rollo angeordnet ist, einer Reinigung nur schwer zugänglich.

Es war deshalb die Aufgabe der vorliegenden Erfindung, eine Seitenverkleidung zur Verfügung zu stellen, die die Nachteile des Standes der Technik nicht aufweist.

Gelöst wird die Aufgabe erfindungsgemäß durch die Seitenverkleidung eines Kraftfahrzeuges gemäß Patentanspruch 1.

Es war für den Fachmann überaus erstaunlich und nicht zu erwarten, dass die erfindungsgemäße Seitenverkleidung bei einem Unfall ein erheblich vermindertes Sicherheitsrisiko darstellt. Darüber hinaus ist die Seitenverkleidung sehr einfach zu reinigen, so dass das Kraftfahrzeug optisch in einem ansprechenderen Zustand bleibt. Die erfindungsgemäße Seitenverkleidung ist einfach und kostengünstig herzustellen.

Erfindungsgemäß weist die Seitenverkleidung eine Brüstung auf. Diese Brüstung ist in der Regel der Teil der Seitenverkleidung, an den sich ein Fenster anschließt. In diese Brüstung ist erfindungsgemäß flächenbündig ein Rollo integriert. Seitenbereich im Sinne der Erfindung bedeutet Bereiche, in denen die Karosserie oder die Fensterflächen im wesentlichen vertikal verlaufen.

Flächenbündig im Sinne der Erfindung bedeutet, dass der sich normalerweise ergebende Verlauf der Brüstung durch das Rollo nicht verändert wird. Durch das Rollo ergeben sich keinerlei Absätze, Versprünge oder dergleichen. Darüber hinaus stehen keinerlei Bauteile des Rollos aus der Brüstung heraus.

Erfindungsgemäß wird das Rollo in einem Schacht versenkt. Dieser Schacht ist mit einer Schachtblende abgedeckt, wobei diese Schachtblende flächenbündig mit der Brüstung verläuft, d. h. in keinster Weise aus der Brüstung heraussteht. Darüber hinaus stehen auch keinerlei Griffe oder sonstige Bauteile des Rollos aus der Brüstung heraus.

In einer bevorzugten Ausführungsform der vorliegenden Erfindung ist zwischen der Brüstung und der Schachtblende lediglich eine einzige Fuge vorhanden, was insbesondere die Reinigung der Brüstung erheblich vereinfacht und einen optisch ansprechenden Gesamteindruck hervorruft.

Vorzugsweise weist das Rollo einen Zugstab auf, an dem ein Griff angeordnet ist, mit dem das Rollo hochgezogen bzw. heruntergelassen werden kann. Der Zugstab und dieser Griff sind erfindungsgemäß ebenfalls flächenbündig in die Brüstung eingelassen.

Vorzugsweise weist die erfindungsgemäße Seitenverkleidung ein Mittel auf, mit dem der Griff wahlweise anhebbar ist, so dass er aus der Oberfläche der Brüstung heraussteht und dadurch für die Insassen des Kraftfahrzeuges auf Wunsch leichter verfügbar ist. Vorzugsweise handelt es sich bei diesem Mittel um einen Druckschalter, der den Griff nach oben, d. h. aus der Fläche der Brüstung heraus, drückt, sobald temporär Druck auf den Griff ausgeübt wird.

Erfindungsgemäß wirken die Schachtblende und das Rollo so zusammen, dass das Rollo die Schachtblende automatisch öffnet und beim Herunterlassen automatisch wieder schließt.

Die erfindungsgemäße Seitenverkleidung kann überall im Seitenbereich des Kraftfahrzeuges angeordnet sein. Vorzugsweise handelt es sich bei der Seitenverkleidung jedoch um eine Türverkleidung, insbesondere der Türen im hinteren Bereich des Kraftfahrzeuges.

In einer bevorzugten Ausführungsform weisen diese Türen oberhalb der erfindungsgemäßen Seitenverkleidung Mittel auf, in die das Rollo reversibel einhängbar ist, solang der durch das Rollo gespendete Sonnenschutz gewünscht wird.

Im folgenden wird die Erfindung anhand der Figuren 1 bis 8 erläutert. Diese Erläuterungen sind lediglich beispielhaft und schränken den allgemeinen Erfindungsgedanken nicht ein.
- **Figur 1**: zeigt einen Schnitt durch die erfindungsgemäße Seitenverkleidung,
- **Figur 2**: zeigt die erfindungsgemäße Seitenverkleidung in einem Schnitt und in einer dreidimensionalen Darstellung im geschlossenen Zustand,
- **Figur 3**: zeigt die Türverkleidung gemäß Figur 2 mit heruntergedrücktem Griff,
- **Figur 4**: zeigt die Türverkleidung gemäß den voranstehenden Figuren mit angehobenem Griff,
- **Figur 5**: zeigt die erfindungsgemäße Seitenverkleidung mit geöffneter Blende,
- **Figur 6**: zeigt die erfindungsgemäße Türverkleidung mit herausgezogenem Rollo,
- **Figur 7**: zeigt das Mittel zum Einhängen des Zugstabes und
- **Figur 8**: zeigt das Zusammenwirken des Zugstabes mit dem Einhängmittel.

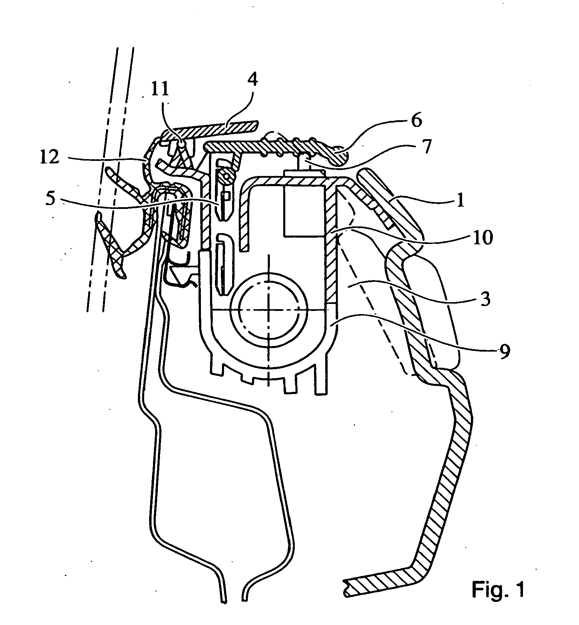

In **Figur 1** ist die erfindungsgemäße Seitenverkleidung dargestellt, die in ihrem oberen Bereich eine Brüstung 1 aufweist. Unterhalb der Brüstung 1 befindet sich ein Schacht 3, der mit einer Schachtabdeckung 4, die drehbar um das Lager 11 gelagert ist, abgedeckt wird. Die Schachtabdeckung 4 weist in ihrem hinteren Bereich eine Dichtung 12 auf, mit der verhindert wird, dass Schmutz oder Feuchtigkeit in den Raum zwischen die Schachtabdeckung und die Karoserie bzw. die Scheibe gelangt. In dem Schacht 3 ist eine Kassette 9 über die Anbindung 10 mit der Brüstung 1 verbunden ist, angeordnet. In der Brüstung 1 befindet sich das Rollo (nicht dargestellt). Am Ende des Rollos ist ein Zugstab 5 angeordnet, der ein drehbar gelagerten Griff 6 aufweist. Im geschlossenen Zustand, d. h. in dem Zustand, in dem die Schachtblende 4 den Schacht 3 vollständig abdeckt, liegt der Griff 6 auf einem Druckschalter 7 auf, mit dem der Griff 6 anhebbar ist. Im geschlossenem Zustand ist das Rollo flächenbündig in die Brüstung integriert, d. h. weder die Schachtabdeckung 4 noch der Griff 6 stehen aus der Brüstung heraus.

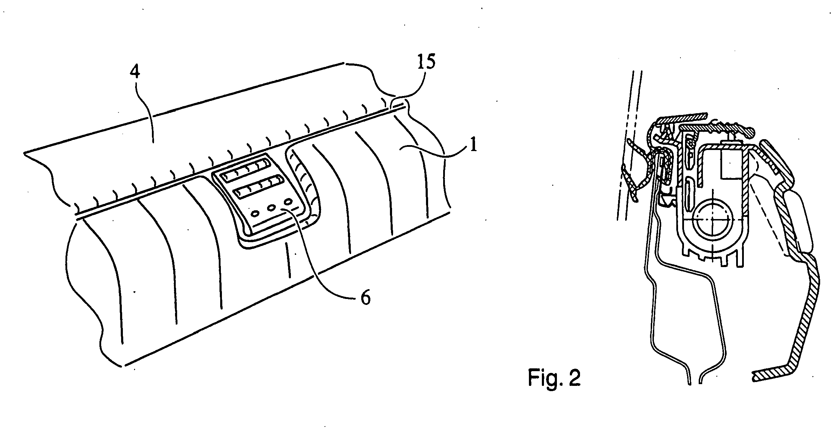

**Figur 2** zeigt im rechten Teil den Schnitt gemäß **Figur 1** und im linken Teil eine dreidimensionale Darstellung der erfindungsgemäßen Seitenverkleidung, wobei lediglich die Brüstung 1 dargestellt ist. Es ist deutlich zu erkennen, dass die Schachtabdeckung 4 und der Griff 6 flächenbündig mit der Brüstung 1 verlaufen, d. h. weder die Schachtabdeckung 4 noch der Griff 6 stehen aus der Brüstung 1 heraus. Darüber hinaus ist zu erkennen, dass sich zwischen der Schachtabdeckung 4 bzw. dem Griff 6 und der Brüstung 1 lediglich eine Fuge 15 vorhanden ist, was die Reinigung der Brüstung erheblich vereinfacht. Dadurch, dass die Schachtabdeckung und der Griff nicht aus der Brüstung herausstehen, stellt das Rollo kein Sicherheitsrisiko im Falle eines Unfalls dar.

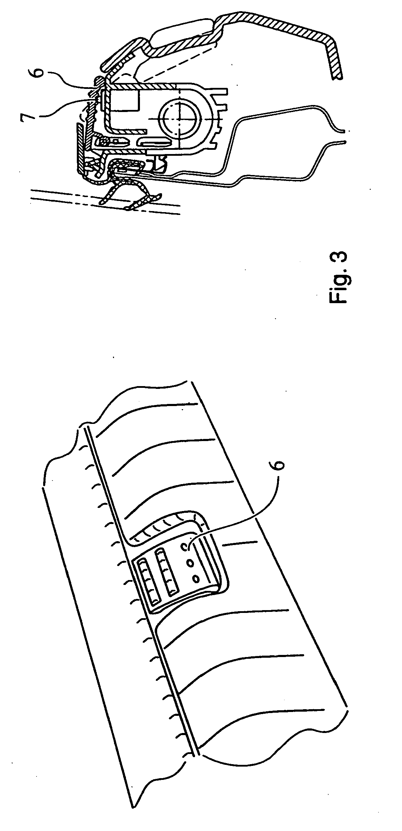

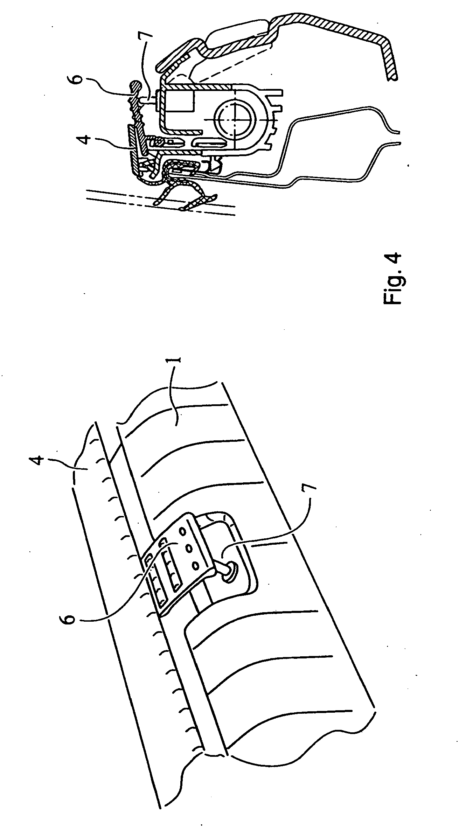

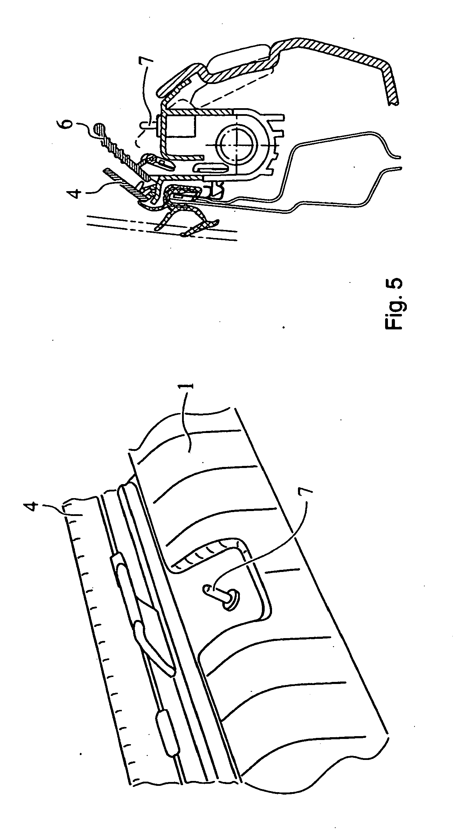

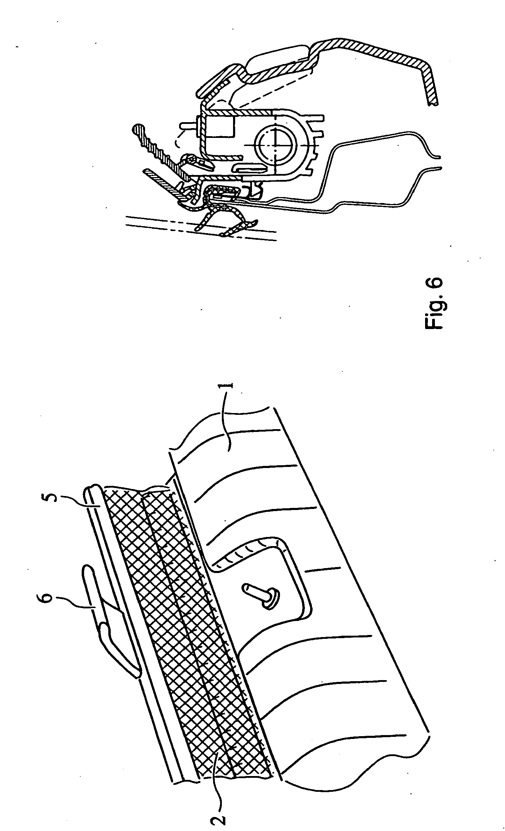

In den **Figuren 3 bis 6** ist das Abrollen des Rollos dargestellt. Der erste, in **Figur 3** dargestellte, Schritt besteht darin, dass der Griff 6 nach unten gedrückt wird und dabei das Mittel 7, ein Druckschalter, betätigt wird. Sobald der Druck auf dem Griff 6 nicht mehr vorhanden ist, drückt der Druckschalter 7 den Griff 6 nach oben, so dass dieser nunmehr aus der Brüstung heraussteht (vgl. **Figur 4**). Dabei wird die Schachtabdeckung 4 leicht angehoben. **Figur 5** zeigt die Schachtabdeckung 4 im voll geöffneten Zustand. Der Griff 6 steht nun deutlich aus der Brüstungsfläche heraus und kann von dem jeweiligen Benutzer leicht ergriffen und mit ihm, wie in **Figur 6** dargestellt, das Rollo aus dem Schacht 3 herausgezogen werden.

Sobald das Rollo im wesentlichen vollumfänglich aus dem Schacht herausgezogen ist, kann der Zugstab 5, wie durch Pfeil 13 dargestellt, in die Haltevorrichtung eingehakt werden.

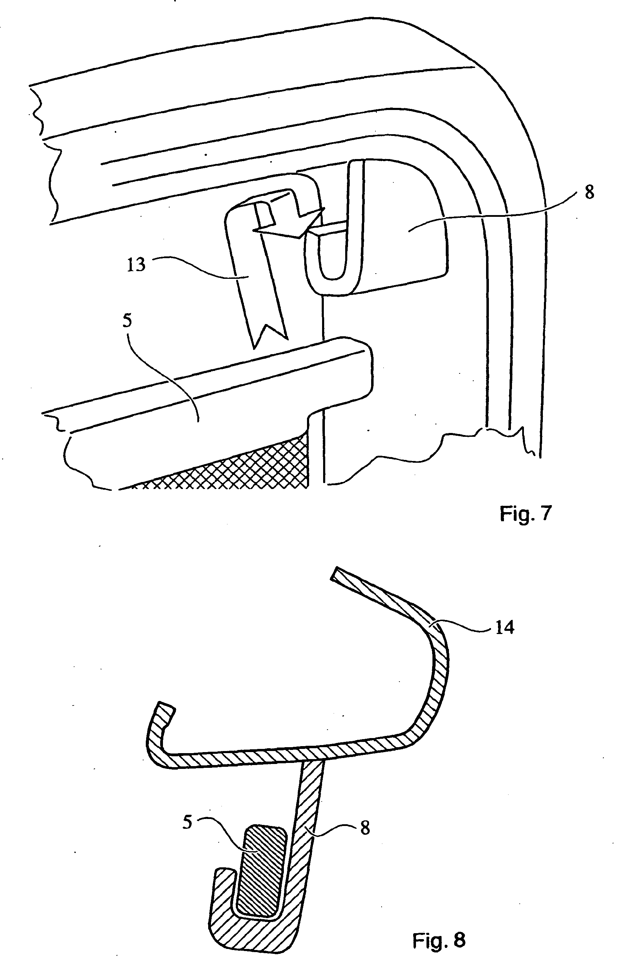

Dieses reversible Einhaken ist noch einmal in **Figur 8** im Schnitt dargestellt. In dieser Darstellung ist zu sehen, dass das L-förmig gestaltete Haltemittel 8 an einem Holm 14 einer Tür angeordnet ist.

### Bezugszeichenliste

- 1: Brüstung
- 2: Rollo
- 3: Schacht
- 4: Schachtabdeckung
- 5: Zugstab
- 6: Griff
- 7: Hebemittels des Griffes, Druckschalter
- 8: Einhängmittel für den Zugstab
- 9: Kassette, in welcher sich das Rollo befindet
- 10: Anbindung der Kassette an die Brüstung
- 11: Drehlager der Schachtabdeckung
- 12: Dichtung zwischen Karosserie und Schachtabdeckung
- 13: Pfeil
- 14: Türholm

## Patentansprüche

1. Seitenverkleidung eines Kraftfahrzeuges, die eine Brüstung (1) aufweist, wobei in die Brüstung flächenbündig ein Rollo (2) integriert ist, wobei das Rollo in einem Schacht (3) versenkbar ist, der mit einer Schachtblende (4) abgedeckt ist, wobei die Schachtblende flächenbündig mit der Brüstung (1) verläuft und die Schachtblende von dem Rollo automatisch öffnend und schließend betätigbar ist, **dadurch gekennzeichnet, dass** die Schachtblende (4) drehbar um ein Lager (11) gelagert ist und in ihrem hinteren Bereich eine Dichtung (12) zwischen Karosserie und der Schachtblende (4) aufweist.

2. Seitenverkleidung eines Kraftfahrzeuges nach Anspruch 1, **dadurch gekennzeichnet, dass** das Rollo durch einen Griff hochziehbar und herunterziehbar ist, wobei der Griff ebenfalls flächenbündig in die Brüstung eingelassen ist.

3. Seitenverkleidung nach Anspruch 1, **dadurch gekennzeichnet, dass** das Rollo (2) einen Zugstab (5) mit einem Griff (6) aufweist, der flächenbündig in der Brüstung eingelassen ist.

4. Seitenverkleidung eines Kraftfahrzeuges nach Anspruch 2 oder 3, **dadurch gekennzeichnet, dass** sie ein Mittel (7) aufweist, das den Griff (6) anhebt.

5. Seitenverkleidung nach einem der vorhergehenden Ansprüche, **dadurch gekennzeichnet, dass** die Brüstung (1) nur eine Fuge (15) aufweist.

6. Seitenverkleidung nach einem der vorhergehenden Ansprüche, **dadurch gekennzeichnet, dass** sie Teil einer Seitentür ist.

7. Seitenverkleidung nach einem der vorhergehenden Ansprüche, **dadurch gekennzeichnet, dass** die Seitentür Mittel (8) aufweist, in die das Rollo einhängbar sind.

## Claims

1. Side lining of a motor vehicle, which side lining has a sill (1), with a roller blind (2) being integrated flush-mounted into the sill with it being possible for the roller blind to be sunk into a shaft (3) which is covered by a shaft faceplate (4), with the shaft faceplate running flush with the sill (1) and with it being possible for the shaft faceplate to be actuated in an automatically opening and closing manner by the roller blind, **characterized in that** the shaft faceplate (4) is mounted so as to be rotatable about a bearing (11) and has, in its rear region, a seal (12) between a body and the shaft faceplate (4).

2. Side lining of a motor vehicle according to Claim 1, **characterized in that** the roller blind can be pulled up and pulled down by means of a handle, with the handle likewise being mounted flush in the sill.

3. Side lining according to Claim 1, **characterized in that** the roller blind (2) has a pull rod (5) with a handle (6) which is mounted flush in the sill.

4. Side lining of a motor vehicle according to Claim 2 or 3, **characterized in that** said side lining has a means (7) which raises the handle (6).

5. Side lining according to one of the preceding claims, **characterized in that** the sill (1) has only one joint (15).

6. Side lining according to one of the preceding claims, **characterized in that** said side lining is part of a side door.

7. Side lining according to one of the preceding claims, **characterized in that** the side door has means (8) into which the roller blind can be hooked.

## Revendications

1. Revêtement latéral d'un véhicule automobile comportant un appui (1), un store (2) étant intégré dans l'appui en affleurement de surfaces, le store pouvant être descendu dans une gaine (3) recouverte par un cache de gaine (4), le cache de gaine avançant en affleurement de surfaces avec l'appui (1) et le cache de gaine pouvant être actionné de façon automatique par le store pour réaliser un mouvement d'ouverture ou de fermeture, **caractérisé en ce que** le cache de gaine (4) est disposé de façon à pouvoir tourner autour d'un palier (11) et comporte dans sa zone arrière un joint d'étanchéité (12) positionné entre la carrosserie et le cache de gaine (4).

2. Revêtement latéral d'un véhicule automobile selon la revendication 1, **caractérisé en ce que** le store peut être tiré vers le haut et vers le bas à l'aide d'une poignée, la poignée étant également intégrée en affleurement de surfaces dans l'appui.

3. Revêtement latéral selon la revendication 1, **caractérisé en ce que** le store (2) comporte une tirette (5) dotée d'une poignée (6) qui est intégrée en affleurement de surfaces dans l'appui.

4. Revêtement latéral d'un véhicule automobile selon la revendication 2 ou 3, **caractérisé en ce qu'**il comporte un moyen (7) permettant de soulever la poignée (6).

5. Revêtement latéral selon l'une quelconque des revendications précédentes, **caractérisé en ce que** l'appui (1) ne comporte qu'une jointure (15).

6. Revêtement latéral selon l'une quelconque des revendications précédentes, **caractérisé en ce qu'**il fait partie d'une porte latérale.

7. Revêtement latéral selon l'une quelconque des revendications précédentes, **caractérisé en ce que** la porte latérale comporte des moyens (8) dans lesquels le store peut être accroché.
